# EUROPÄISCHE PATENTSCHRIFT

(11) **EP 2 727 705 B1**
(45) Veröffentlichungstag und Bekanntmachung des Hinweises auf die Patenterteilung: **03.02.2016**
(21) Anmeldenummer: 13191829.4
(22) Anmeldetag: 06.11.2013
(51) Int. Cl.: B29C 49/64, B29C 49/42, B29C 49/78

(54) **Vorrichtung zum Erwärmen von Kunststoffvorformlingen mit Sicherheitseinrichtung und Verfahren**
Device for heating plastic pre-forms with a safety device and method
Dispositif de chauffage d'ébauches en matière synthétique dotées d'un dispositif de sécurité et procédé

(30) Priorität: 06.11.2012 DE 102012110601
(43) Veröffentlichungstag der Anmeldung: 07.05.2014
(73) Patentinhaber: Krones AG, 93073 Neutraubling (DE)
(72) Erfinder: Schönberger, Wolfgang, 93073 Neutraubling (DE); Seidenberg, Katharina, 93073 Neutraubling (DE)
(74) Vertreter: Bittner, Bernhard

(56) Entgegenhaltungen:
- EP-A2- 2 377 668
- AT-B- 412 543
- DE-A1-102009 057 021
- DE-U1- 20 311 657

## Beschreibung

Die vorliegende Erfindung bezieht sich auf eine Vorrichtung und ein Verfahren zum Erwärmen von Kunststoffvorformlingen. Im Bereich der Getränke herstellenden Industrie ist es bekannt, dass Kunststoffbehältnisse aus Kunststoffvorformlingen durch Blasvorgänge hergestellt werden. Zu diesem Zweck werden üblicherweise sogenannte Streckblasmaschinen verwendet, welche die Kunststoffvorformlinge mit Druckluft beaufschlagen und üblicherweise auch mittels einer Reckstange dehnen. Genauer werden in solchen Streckblasmaschinen für Kunststoffbehälter vorgefertigte Kunststoffvorformlinge (im Folgenden auch als Preforms bezeichnet) in einer Förderstrecke durch eine Heizeinrichtung gefördert, ehe sie in der Blasstation verarbeitet werden. Dabei ist jeder Kunststoffvorformling bereits mit einer Mündung ausgebildet, die im Wesentlichen der Mündung des fertigen Behältnisses bzw. der fertigen Flasche entspricht.

Die Kunststoffvorformlinge sind dabei üblicherweise Spritzgussteile, die in der Heizeinrichtung auf eine Umformtemperatur und anschließend in der Blasvorrichtung in ihre endgültige Form gebracht werden. Dabei werden die Kunststoffvorformlinge in dem Heizmodul üblicherweise von einer Spindel und einem Transportdorn getragen, der an einem Kettenglied gelagert ist. In der Heizeinrichtung werden mehrere Kettenglieder mit den darin gelagerten Spindeln verbunden und bilden so eine endlos umlaufende Kette. An der außen liegenden Seite, insbesondere der geraden Längsseiten dieses Transportpfades, befinden sich Heizeinrichtungen, die den Kunststoffvorformling mittels Infrarotstrahlung Wärme zuführen. An der Innenseite und am Boden sind dabei oftmals Reflektoren vorgesehen, um die ausgestrahlte Infrarotstrahlung möglichst gut zu nutzen.

Die Kunststoffvorformlinge werden dabei in ihrem Mündungsbereich über einen Reibschluss mittels des Transportdorns von innen geklemmt. Dadurch werden die Kunststoffvorformlinge gehalten. Bei schlechten Toleranzen oder einer unzureichenden Klemmung kann es bei dieser Anordnung zu einem Herabfallen der Kunststoffvorformlinge kommen. Diese würden in eine darunter liegende Heizgasse fallen und dort eventuell Beschädigungen oder sogar Brände verursachen.

Im Stand der Technik wird dieses Problem dadurch gelöst, dass unterhalb der Transportpfade der Kunststoffvorformlinge genügend Platz ist. Dies bedeutet, dass auch, wenn ein Kunststoffvorformling von seinem Haltedorn herunterfällt, dieser keine Gefahr für die nachfolgenden Kunststoffvorformlinge darstellt, da im unteren Bereich der Heizeinrichtung genügend Freiraum vorhanden ist.

Im Stand der Technik sind jedoch auch Vorgehensweisen bekannt, bei denen eben gerade die Reflektorelemente möglichst nahe an die Kunststoffvorformlinge herangeführt sind. Dies bringt jedoch den Nachteil mit sich, dass genau dieser Freiraum nicht mehr gegeben ist und erhöht somit das Risiko, dass, wenn Kunststoffvorformlinge herabfallen, diese zu großen Schäden in der Heizeinrichtung führen können.

Der oben genannte Nachteil ist aus der DE102009057021 A1 bekannt, aus welcher ein Verfahren und eine Vorrichtung bekannt sind, die zur Blasformung von Behältern dienen. Bei dieser Vorrichtung ist eine im Bereich einer Heizstrecke quer zum Transportweg angeordnete Querschnittfläche der Heizstrecke veränderbar.

Die Querschnittfläche wird in Abhängigkeit von einer Dimensionierung der zu beheizenden Vorformlinge verändert.

Ebenso tritt der genannte Nachteil bei einem Verfahren und einer Vorrichtung zum Erwärmen von Hohlkörpern aus der AT412543B auf. Mit einer Abtasteinrichtung werden die Außenkonturen eines Hohlkörpers bzw. Vorformlings abgetastet und an die Heizeinrichtungen übermittelt. Durch die Koppelung mit der Abtasteinrichtung wird die Heizeinrichtung so verstellt, dass sie sich der unterschiedlichen Außenkonturen anpasst.

Der vorliegenden Erfindung liegt daher die Aufgabe zugrunde, eine Vorrichtung und ein Verfahren zum Erwärmen von Kunststoffvorformlingen zu schaffen, welches einerseits energieeffizient arbeitet, andererseits jedoch Sicherheitsrisiken, die insbesondere daraus entstehen, dass Kunststoffvorformlinge von ihren Trägern herabfallen können, verringert. Diese Aufgaben werden erfindungsgemäß durch die Gegenstände der unabhängigen Ansprüche erreicht.

Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfades transportiert. Dabei weist die Transporteinrichtung eine Vielzahl von Hal teelementen auf, welche zum Halten der Kunststoffvorformlinge geeignet und bestimmt sind. Daneben weist die Vorrichtung auch eine Erwärmungseinrichtung auf, welche die von der Transporteinrichtung transportierten Kunststoffvorformlinge erwärmt, wobei diese Erwärmungseinrichtung ein wenigstens zeitweise unterhalb des Transportpfads der Kunststoffvorformlinge angeordnetes Wandungselement aufweist, wobei dieses Wandungselement bewegbar ist.

Erfindungsgemäß weist die Vorrichtung eine Erfassungseinrichtung auf, welche eine Fehlstellung und/oder ein Herabfallen wenigstens eines Kunststoffvorformlings gegenüber dem ihn haltenden Halteelement erfasst sowie eine Steuerungseinrichtung, welche aufgrund einer von der Erfassungseinrichtung erfassten Fehlstellung und/oder eines Herabfallens wenigstens eines Kunststoffvorformlings eine Bewegung des Wandungselements einleitet.

Vorteilhaft dient dabei dieses Bewegungselement dazu, um zu verhindern, dass der Kunststoffvorformling die weiteren Kunststoffvorformlinge behindert. Insbesondere soll durch die Bewegung des Wandungselements dieser Kunststoffvorformling aus dem Transportstrom und insbesondere auch aus der Erwärmungseinrichtung ausgeschleust werden, damit dieser Kunststoffvorformling keinen Schaden anrichten kann.

Vorteilhaft ist dieses Wandungselement als Reflektorelement ausgebildet, welches zumindest zum Reflektieren von Infrarotstrahlung geeignet und bestimmt ist.

Vorteilhaft ist dieses Wandungselement in einer Längsrichtung der Kunststoffvorformlinge verstellbar und/oder wenigstens abschnittsweise in dieser Längsrichtung bewegbar. Es wäre jedoch auch möglich, dass das besagte Wandungselement quer zu dieser Längsrichtung bewegt wird, um einen herausgefallenen bzw. herabgefallenen Kunststoffvorformling auszuschleusen.

Es ist dabei möglich, dass dieses Wandungselement direkt unterhalb des Transportpfades der Kunststoffvorformlinge angeordnet ist. Es ist jedoch auch möglich, dass sich ein entsprechendes Wandungselement seitlich unterhalb des Transportpfades befindet, beispielsweise in Form eines Seitenwandungselements, welches bei Herabfallen eines Kunststoffvorformlings ebenfalls aufgeklappt bzw. wegbewegt werden kann.

Bei einer weiteren vorteilhaften Ausführungsform ist das Wandungselement gegenüber dem Heizelement verstellbar. Auf diese Weise kann insbesondere auch eine Anpassung an unterschiedliche Geometrien und insbesondere Längen der Kunststoffvorformlinge erreicht werden.

Bei einer weiteren vorteilhaften Ausführungsform erlaubt die Erfassungseinrichtung eine Zuordnung bzw. Lokalisierung des herabgefallenen Kunststoffvorformlings. Dabei ist es beispielsweise möglich, dass festgestellt werden kann, in welchem der oben besagten gerade verlaufenden Abschnitten des Transportpfades der Kunststoffvorformling herabgefallen ist. Es wäre jedoch auch möglich, dass die Erfassungseinrichtung individuell feststellen kann, von welchem Halteelement der Kunststoffvorformling herabgefallen ist.

Bei einer weiteren vorteilhaften Ausführungsform erfasst die Erfassungseinrichtung die Fehlstellung und/oder das Herabfallen der Kunststoffvorformlinge berührungslos. Dabei kann dieses Herabfallen beispielsweise mit optischen und/oder akustischen Mitteln erfasst werden. Es wäre jedoch auch möglich, dass ein Erfassungsmittel direkt an den jeweiligen Halteelementen angeordnet ist, etwa ein mechanisches Erfassungsmittel, welches erfasst, wenn kein Kunststoffvorformling mehr an dem jeweiligen Halteelement angeordnet ist.

Bei einer weiteren vorteilhaften Ausführungsform ist eine Antriebseinrichtung zum Bewegen des Wandungselementes vorgesehen. Bei dieser Antriebseinrichtung kann es sich beispielsweise um einen pneumatischen und/oder elektrischen Antrieb handeln.

Bei einer weiteren vorteilhaften Ausführungsform weist die Vorrichtung eine Strahlungseinrichtung auf, sowie eine Erfassungs- bzw. Empfangseinrichtung, welche die von der Strahlungseinrichtung ausgehende Strahlung aufnimmt, bzw. hierzu geeignet und bestimmt ist. Die Strahlungs- sowie Erfassungseinrichtungen können dabei pro Heizstrecke einmal oder mehrmals angeordnet sein. Bevorzugt ist für jedes Heizmodul eine Strahlungs- sowie Erfassungseinrichtung vorgesehen.

Bevorzugt verläuft ein optischer Pfad zwischen der Strahlungseinrichtung und der Empfangseinrichtung unterhalb der Kunststoffvorformlinge. Bei dieser Ausführungsform ist die Erfassungseinrichtung vorteilhaft als Lichtschrankeneinheit ausgebildet, welche ein Herabfallen der Kunststoffvorformlinge feststellen kann.

Bevorzugt wird dabei ein Laser eingesetzt, der auch ein- oder mehrfach umgelenkt werden kann.

Dabei kann bevorzugt der optische Pfad dieser Lichtschranke bzw. des Lasers entlang der Transportrichtung der Kunststoffvorformlinge bzw. parallel hierzu verlaufen. In diesem Falle kann festgestellt werden, falls irgendein Kunststoffvorformling entlang dieses Transportpfades herabgefallen ist. Es wäre jedoch auch möglich, dass der optische Pfad zickzackartig quer zu dem Transportpfad der Kunststoffvorformlinge verläuft. Daneben wäre es auch möglich, dass mehrere Strahlungseinrichtungen und mehrere Erfassungseinrichtungen vorgesehen sind, welche damit eine Vielzahl von optischen Pfaden ausbilden. In diesem Falle wäre es auch möglich, festzustellen, von welchem Halteelement ein Kunststoffvorformling herabgefallen ist.

Vorteilhaft liegt ein Abstand zwischen dem optischen Pfad der Strahlungseinrichtung und dem Kunststoffvorformling bzw. insbesondere dessen unteren Ende zwischen 0,2 cm und 5 cm, bevorzugt zwischen 0,4 cm und 5 cm, bevorzugt zwischen 1 cm und 5 cm und besonders bevorzugt zwischen 1 cm und 4 cm. Der optische Pfad unterhalb der Kunststoffvorformlinge kann dabei zentral und/oder automatisch an die Geometrie der Kunststoffvorformlinge angepasst werden. Eine entsprechende Steuerung kann hierfür die Daten bzgl. der Geometrie aus der Maschinensteuerung lesen und anhand derer den optischen Pfad möglichst optimal einstellen.

Auf diese Weise wird erreicht, dass bereits sehr frühzeitig auf ein Herabfallen eines Kunststoffvorformlings reagiert werden kann. Auch kann auf diese Weise erreicht werden, dass gegebenenfalls auch bei einem schiefen Herabfallen der Kunststoffvorformlinge diese jedenfalls den optischen Pfad unterbrechen und damit die Erfassung des Herabfallens ermöglichen. Auch kann durch diesen geringen Abstand sehr schnell reagiert werden, um beispielsweise das Wandungselement schnell entfernen zu können bzw. es in eine Stellung zu bringen, in der es bewirkt, dass der herabgefallene Kunststoffvorformling zumindest die übrigen Kunststoffvorformlinge nicht mehr behindert.

Bei einer weiteren vorteilhaften Ausführungsform ist in einem optischen Pfad zwischen der Strahlungseinrichtung und der Erfassungseinrichtung wenigstens ein Strahlungsumlenkelement angeordnet. Bei diesem Strahlungsumlenkelement kann es sich beispielsweise um einen Spiegel oder um ein Prisma handeln. Auf diese Weise kann der optische Pfad segmentiert werden, um, wie oben erwähnt, eine genauere Lokalisierung eines herabfallenden Kunststoffvorformlings zu ermöglichen. Auch kann so dem Umstand Rechnung getragen werden, dass insbesondere bei langen Strecken innerhalb der Heizeinrichtung die Effizienz einer Lichtschranke abnimmt.

Bei einer weiteren vorteilhaften Ausführungsform ist das Wandungselement derart bewegbar, dass ein Ausschleusen eines herabfallenden Kunststoffvorformlings ermöglicht ist. Auf diese Weise wird nicht nur das Wandungselement bewegt, um einen Brand oder dergleichen zu verhindern, sondern diese Bewegung des Wandungselements dient auch zum Ausschleusen des herabgefallenen Kunststoffvorformlings.

Bei einer weiteren vorteilhaften Ausführungsform weist die Vorrichtung eine Dreheinrichtung auf, welche eine Drehung der einzelnen Kunststoffvorformlinge um deren Längsachsen oder hierzu parallele Achsen während deren Transport und insbesondere auch während deren Erwärmung ermöglicht. Vorteilhaft erlaubt dabei diese Dreheinrichtung eine Volldrehung und insbesondere mehrere Volldrehungen. Vorteilhaft wird der Kunststoffvorformling daher während seiner Erwärmung bzw. während seines Transports durch die Erwärmungseinrichtung mehrfach um seine eigene Achse gedreht.

Bei einer weiteren vorteilhaften Ausführungsform weist die Erwärmungseinrichtung wenigstens ein Heizelement auf, welches seitlich neben dem Transportpfad der Kunststoffvorformlinge angeordnet ist. Vorteilhaft ist dieses Heizelement bezüglich eines umlaufenden Transportpfades der Halteelement außerhalb angeordnet. Bei einer weiteren vorteilhaften Ausführungsform ist entlang des Transportpfades der Kunststoffvorformlinge eine Vielzahl von derartigen Heizelementen angeordnet. Dabei ist es möglich, dass diese Heizelemente unabhängig voneinander steuerbar sind und dass gegebenenfalls nach Bedarf auch einzelne Heizelemente zu- bzw. abgeschaltet werden können.

Vorteilhaft sind dabei diese Heizelemente derart angeordnet, dass ein Gewinde des Kunststoffvorformlings nicht erwärmt wird. Zu diesem Zwecke können beispielsweise Abschirmelemente angeordnet sein, welche die Heiz- bzw. Wärmestrahlung von den Gewinden der Kunststoffvorformlinge ablenken. Anstelle von Infrarotstrahlung kann jedoch zur Erwärmung der Kunststoffvorformlinge auch Mikrowellenstrahlung eingesetzt werden. Dabei wäre es beispielsweise möglich, dass die Heizeinrichtung eine Vielzahl von Heizkavitäten aufweist, innerhalb derer die Kunststoffvorformlinge gefördert werden.

Bei einer weiteren vorteilhaften Ausführungsform weist die Vorrichtung auch seitlich neben dem Transportpfad der Kunststoffvorformlinge angeordnete Reflektorelemente auf. Auf diese Weise werden die Kunststoffvorformlinge zwischen den Heizelementen und den besagten Reflektorelementen geführt.

Bei einer weiteren vorteilhaften Ausführungsform erstrecken sich die Heizelemente quer und insbesondere senkrecht zu dem oben genannten Wandungs- bzw. Reflektorelement, welches sich unterhalb des Transportpfades der Kunststoffvorformlinge befindet.

Bei einer weiteren vorteilhaften Ausführungsform weist die Heizeinrichtung zwei im Wesentlichen geradlinige Transportstrecken auf. Vorteilhaft sind unterhalb dieser jeweils geradlinig verlaufenden Transportstrecken die oben erwähnten Wandungselemente angeordnet und auch bewegbar.

Bei einer weiteren vorteilhaften Ausführungsform ist die unterhalb des Transportpfades der Kunststoffvorformlinge verlaufende Wandung segmentiert. Dies bedeutet, dass einzelne Bereiche dieser Wandung bzw. dieses Wandungselements einzeln geöffnet bzw. bewegt werden können. Bei dieser Ausführungsform wird erreicht, dass bei einem Öffnen der Bodenwandung nicht notwendigerweise eine gesamte Marge an Kunststoffvorformlingen entsorgt werden muss. Es ist hierbei zu berücksichtigen, dass der besagte Erwärmungsprozess der Kunststoffvorformlinge sehr genau abgestimmt ist und möglicherweise auch bei einem kurzzeitigen Öffnen der gesamten Reflektorwandung die Erwärmung der Kunststoffvorformlinge sich derart verändert, dass sie für den ebenfalls auf die Erwärmung abgestimmten anschließenden Blasformvorgang nicht mehr geeignet sind.

Bei einer weiteren vorteilhaften Ausführungsform weist das Wandungselement eine Ausbuchtung auf, durch welche beispielsweise eine untere Bodenkuppe der Kunststoffvorformlinge wandert. Mittels einer derartigen Ausbuchtung kann der Wärmeeintrag auf die Kunststoffvorformlinge noch weiter verbessert werden.

Bei einer weiteren vorteilhaften Ausführungsform weist die Vorrichtung eine Auffangeinrichtung zum Auffangen herabgefallener Kunststoffvorformlinge auf. Dabei kann diese Auffangeinrichtung beispielsweise unterhalb der oben erwähnten Wandung sein. Falls ein Kunststoffvorformling herabfällt, kann dieser durch Bewegung des Wandungselements in die Auffangeinrichtung gelangen.

Bei einer weiteren vorteilhaften Ausführungsform weist wenigstens ein unterhalb des Transportpfads der Kunststoffvorformlinge angeordnetes Element eine wenigstens abschnittsweise gegenüber einer horizontalen Ebene geneigte (und der Kunststoffvorformlingen zugewandte) Oberfläche auf. Diese Neigung kann dabei vorteilhaft bewirken, dass ein herabgefallener Kunststoffvorformling und/oder Bestandteile diese Kunststoffvorformlings wie etwa eine verflüssigte Masse aus der Vorrichtung herausgelangen können. Vorteilhaft liegt dabei ein Neigungswinkel dieser Oberfläche in einer Ebene, welche senkrecht zu dem Transportpfad der Kunststoffvorformlinge steht. Bevorzugt ist dieser Neigungswinkel wenigstens abschnittsweise entlang des Transportpfads der Kunststoffvorformlinge konstant.

Bevorzugt handelt es sich bei diesem Element bzw. Wandungselement um eine (in einem vorgegebenen Winkel d.h. Neigungswinkel angestellte Bodenkachel, um im Falle von Preformverlust im Ofen gewährleisten zu können, dass der gefallene Kunststoffvorformling weder die nachfolgenden Kunststoffvorformlinge behindert, noch anfängt zu brennen und somit den Ofen beschädigt. Wenn ein Kunststoffvorformling fällt und bereits etwas erwärmt ist, fängt er extrem an zu kleben, woraufhin die im Transportweg nachfolgenden Kunststoffvorformlinge an diesem kleben bleiben und diese somit auch vom Dorn bzw. ihrer Halteeinrichtung gezogen werden können. Dadurch kann sich innerhalb kürzester Zeit eine große Masse an zusammengeklebten Kunststoffvorformlingen bilden, die aufgrund der Hitze im Ofen anfangen können zu brennen. Durch das Anstellen der Bodenkachel kann der Preform aus dem Transportweg geräumt werden bzw. aus dem Transportweg rutschen

Daneben ist es denkbar, dass das geneigte Wandungselement bzw. die angestellte Bodenkachel gewährleistet, dass bei einem Herabfallen der Kunststoffvorformlinge nach Verflüssigung ein kontrolliertes Abfließen der flüssigen PET Masse auftritt.

Daneben ist es möglich durch eine derartige Neigung des Wandungselements bzw. der Kachel, die Wärmestrahlung bzw. Infrarotstrahlung besser auf einen Kuppenbereich der Kunststoffvorformlinge zu lenken.

Bevorzugt liegt ein Neigungswinkel, um den das Wandungselement bzw. eine dem Transportpfad der Kunststoffvorformlinge zugewandte Oberfläche des Wandungselements gegenüber der Horizontalen geneigt ist, zwischen 1° und 15°, bevorzugt zwischen 2° und 12° und besonders bevorzugt zwischen 3° und 7° und besonders bevorzugt bei ca. 5°. Weiterhin wäre es möglich dass ein derartiger geneigter Abschnitt in geradlinig verläuft, es wäre jedoch auch ein gekrümmter Verlauf denkbar. Im Falle eines gekrümmten Verlaufs ist es denkbar, dass zumindest lokal der Neigungswinkel in einem Bereich von 5° liegt.

Die vorliegende Erfindung ist weiterhin auf eine Anordnung zum Herstellen von Kunststoffflaschen gerichtet. Diese Anordnung weist eine Erwärmungsvorrichtung der oben beschriebenen Art auf sowie eine dieser nachgeordnete Umformungseinrichtung zum Umformen von Kunststoffvorformlingen zu Kunststoffbehältnissen. Vorteilhaft handelt es sich bei dieser Vorrichtung zum Umformen von Kunststoffvorformlingen zu Kunststoffbehältnissen um eine Streckblasmaschine, welche insbesondere eine Vielzahl von Umformungsstationen aufweist, welche an einem beweglichen Träger angeordnet sind. Vorteilhaft handelt es sich bei diesem beweglichen Träger um ein sogenanntes Blasrad, welches damit die zu expandierenden Kunststoffvorformlinge entlang eines kreisförmigen Pfades führt. Vorteilhaft weisen die einzelnen Umformungsstationen dieser Vorrichtung zum Umformen von Kunststoffvorformlingen zu Kunststoffbehältnissen gegenüber einander schwenkbare Seitenteile auf, welche in einem geschlossenen Zustand einen Hohlraum ausbilden, innerhalb dessen die Kunststoffvorformlinge zu den Kunststoffbehältnissen expandierbar sind. Daneben weist diese Umformungseinrichtung eine Beaufschlagungseinrichtung auf, welche die Kunststoffvorformlinge mit einem gasförmigen Medium und insbesondere mit Blasluft zu deren Expansion beaufschlagt.

Bei einer weiteren vorteilhaften Ausführungsform weist die Anordnung auch eine Steuerungseinrichtung auf, welche einen Umformungsvorgang der Kunststoffvorformlinge zu den Kunststoffbehältnissen auch in Abhängigkeit von wenigstens einem für die Erwärmung der Kunststoffvorformlinge charakteristischen Parameter steuert.

Die vorliegende Erfindung ist weiterhin auf ein Verfahren zum Erwärmen von Kunststoffbehältnissen und insbesondere von Kunststoffvorformlingen gerichtet. Dabei werden die Kunststoffvorformlinge mittels einer Transporteinrichtung entlang eines vorgegebenen Transportpfades transportiert und während dieses Transports mittels wenigstens einer Erwärmungseinrichtung bzw. Erwärmungseinrichtung erwärmt. Weiterhin werden die Kunststoffvorformlinge während ihres Transports an Haltelementen gehalten. Erfindungsgemäß wird mittels einer Erfassungseinrichtung eine Fehlstellung und/oder ein Herabfallen eines Kunststoffvorformlings erfasst und in Reaktion auf eine derartige Erfassung wird ein unterhalb des Transportpfads der Kunststoffvorformlinge liegendes Wandungselement bewegt.

Es wird daher auch verfahrensseitig vorgeschlagen, dass ein Herabfallen der Kunststoffvorformlinge erfasst wird und in Reaktion hierauf das oben besagte Wandungselement bewegt wird, insbesondere, um zu verhindern, dass der herabgefallene Vorformling auch weitere Kunststoffvorformlinge bzw. deren Transport behindert.

Vorteilhaft erfolgt die Bewegung des Wandungselements, um den Kunststoffvorformling aus der Vorrichtung auszuschleusen, bzw. um ihn aus dem Erwärmungsvorgang auszuschleusen.

Vorteilhaft wird das Herabfallen der Kunststoffvorformlinge berührungslos erfasst.

Bei einem weiteren vorteilhaften Verfahren ist die Bewegung des Wandungselementes eine Linearbewegung und/oder eine Schwenkbewegung.

Vorteilhaft kann dabei eine Achse einer derartigen Schwenkbewegung parallel zu einer Transportrichtung der Kunststoffvorformlinge sein.

Weitere Vorteile und Ausführungsformen ergeben sich aus den beigefügten Zeichnungen.

Darin zeigen:
- Fig. 1: Eine schematische Darstellung einer Vorrichtung zum Erwärmen von Kunststoffvorformlingen;
- Fig. 2: eine grob schematische Darstellung einer erfindungsgemäßen Vorrichtung;
- Fig. 3a, 3b: zwei Darstellungen zur Veranschaulichung eines erfindungsgemäßen Verfahrens;
- Fig. 4: eine weitere Ausführungsform einer erfindungsgemäßen Vorrichtung;
- Fig. 5a, 5b: zwei Darstellungen zur Veranschaulichung der Bewegung eines Wandungselements;
- Fig. 6a-6d: vier weitere Darstellungen zur Veranschaulichung eines erfindungsgemäßen Verfahrens; und
- Fig. 7a-7d: vier Darstellungen eines weiteren erfindungsgemäßen Verfahrens;
- Fig. 8: eine Darstellung einer weiteren Ausführungsform der vorliegenden Erfindung; und.
- Fig. 9a - 9c: drei Darstellungen zur Veranschaulichung einer Neigung.

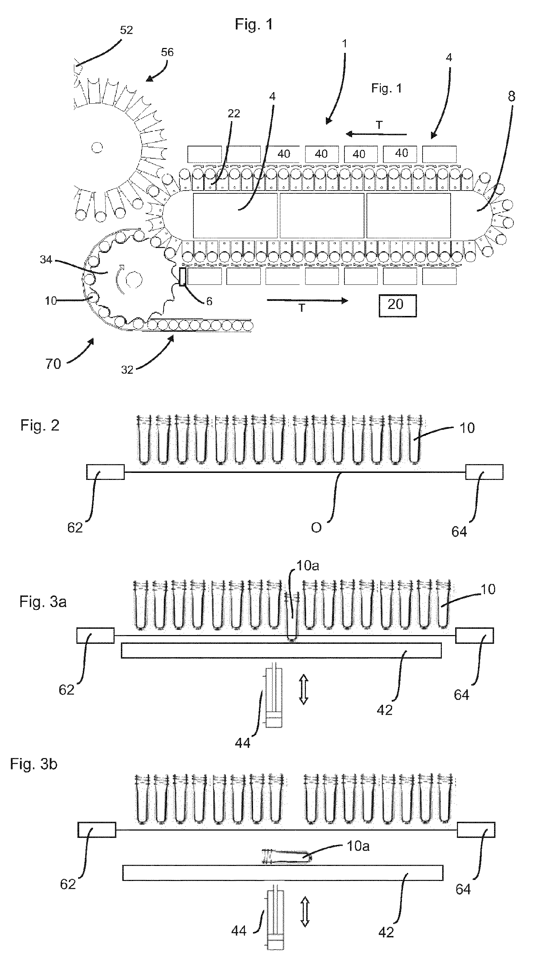

Fig. 1 zeigt eine schematische Darstellung einer Anordnung 70 zum Herstellen von Behältnissen. Diese Anordnung 70 weist eine Zuführeinrichtung 32 auf, über welche Kunststoffvorformlinge 10 einer in ihrer Gesamtheit mit 1 bezeichneten Vorrichtung zum Erwärmen dieser Kunststoffvorformlinge 10 zugeführt werden können. Das Bezugszeichen 34 kennzeichnet eine Vereinzelungseinrichtung, welche diese Kunststoffvorformlinge 10 vereinzelt. Hierbei handelt es sich bei dieser Vereinzelungseinrichtung um einen Sägezahnstern, der an seinem Außenumfang eine Vielzahl von Ausnehmungen aufweist, welche zum Führen der Kunststoffvorformlinge dienen. Die so vereinzelten Kunststoffvorformlinge 10 werden nunmehr der Vorrichtung 1 zum Erwärmen zugeführt. Diese Vorrichtung zum Erwärmen weist dabei eine Vielzahl von Haltelementen 22 auf, welche die einzelnen Kunststoffvorformlinge 10 während ihrer Erwärmung halten. Vorteilhaft weisen dabei diese Halteelemente 22 jeweils Dorne auf, welche in Mündungen der Kunststoffvorformlinge eingreifen, um diese durch einen Reibschluss zu halten. Das Bezugszeichen 4 kennzeichnet in ihrer Gesamtheit eine Erwärmungseinrichtung, welche die einzelnen Kunststoffvorformlinge 10 erwärmt

Die Bezugszeichen 40 beziehen sich auf Heizelemente, die entlang des Transportpfades T der Kunststoffvorformlinge angeordnet sind und damit Bestandteile der Erwärmungseinrichtung 4 sind. Daneben wäre es auch denkbar, dass auch innerhalb des Transportpfades T derartige Heizelemente angeordnet sind. Man erkennt, dass die Kunststoffvorformlinge zunächst entlang eines geradlinigen Abschnitts gefördert werden, anschließend durch ein Umlenkrad 8 deren Bewegungsrichtung umgekehrt wird und diese anschließend entlang eines zweiten geradlinigen Pfades wieder zurückgeführt werden. Weiterhin erkennt man durch die einzelnen kleinen Pfeile, dass die Kunststoffvorformlinge auch während ihrer Erwärmung bezüglich ihrer Längsachsen gedreht werden. Dabei wäre es möglich, dass den Heizelementen weitere Reflektorelemente gegenüberliegen und der Transportpfad der Kunststoffvorformlinge zwischen diesen Heizelementen und den Reflektorelementen verläuft.

Auch wäre es möglich, dass durch die Heizelemente 40, die diesen gegenüberliegenden Reflektorelemente und die jeweiligen Bodenwandungen 42 eine nur nach oben hin geöffnete Heizgasse ausgebildet wird, in der die Kunststoffvorformlinge 10 transportiert werden. Dabei wäre es auch möglich, dass im Bereich des Umlenkrads auch diese Heizgasse ein gekrümmtes Profil aufweist. Auch die Bodenwandungen stellen bevorzugt Bestandteile der Heizeinrichtung 4 dar.

An die Vorrichtung 1 zum Erwärmen der Kunststoffvorformlinge schließt sich eine Umformungseinrichtung zum Umformen der Kunststoffvorformlinge zu den Kunststoffbehältnissen an. Von dieser Umformungseinrichtung ist jedoch nur ein geringer Abschnitt erkennbar, nämlich ein Teil einer derartigen Umformungsstation 52. Diese Umformungsstation ist gemeinsam mit einer Vielzahl von weiteren Umformungsstationen an einem Träger bzw. Blasrad angeordnet.

Das Bezugszeichen 56 kennzeichnet einen Transportstern, der die Kunststoffvorformlinge 10 von der Erwärmungsvorrichtung 1 zu der Umformungseinrichtung fördert.

Das Bezugszeichen 6 kennzeichnet in seiner Gesamtheit schematisch eine Erfassungseinrichtung, welche insbesondere ein Herabfallen von Kunststoffvorformlingen von deren Halteelementen 22 erfasst. Das Bezugszeichen 20 kennzeichnet eine Steuerungseinrichtung, welche in Reaktion auf ein von der Erfassungseinrichtung ausgegebenes Signal, insbesondere ein Signal, welches auftritt, wenn ein Kunstsoffvorformling sich von seinem Halteelement 22 gelöst hat, eine Bewegung des Wandungselements initiiert, so dass der herabfallende Kunststoffvorformling die weiteren Kunststoffvorformlinge nicht mehr behindert.

Fig. 2 zeigt eine schematische Darstellung einer erfindungsgemäßen Vorrichtung 1. Hier sind wieder die einzelnen Kunststoffvorformlinge 10 dargestellt. Unterhalb dieser Kunststoffvorformlinge ist eine Strahlungseinrichtung 62 vorgesehen, welche Strahlung, insbesondere Laserstrahlung, an eine Empfangseinrichtung 64 ausgibt. Auf diese Weise kann ein Herabfallen der Kunststoffvorformlinge erfasst werden. Das Bezugszeichen O kennzeichnet einen optischen Pfad dieser Strahlung. Die Strahlungseinrichtung 62 und die Empfangseinrichtung 64 sind damit Bestandteile der in Fig. 1 angedeuteten Erfassungseinrichtung 6.

Die Fig. 3a und 3b veranschaulichen das erfindungsgemäße Verfahren. In Fig. 3a ist erkennbar, dass ein bestimmter Kunststoffvorformling 10a herabgefallen ist und dieser nunmehr den Lichtstrahl O, der von der Strahlungseinrichtung zu der Erfassungseinrichtung 64 reicht, unterbricht. Diese Unterbrechung wird festgestellt und in Reaktion hierauf wird mittels einer Antriebseinrichtung 44 ein Bodenelement bzw. eine Bodenwandung 42 der Vorrichtung abgesenkt. Fig. 3b zeigt einen Zustand, in dem das Wandungselement abgesenkt ist. Man erkennt, dass der herabgefallene Kunststoffvorformling 10a nunmehr auf diesem Bodensegment liegen kann. Auf diese Weise wird erreicht, dass dieser Kunststoffvorformling 10a den Transport der weiteren Kunststoffvorformlinge 10 nicht behindert. Vorteilhaft ermöglicht die Antriebseinrichtung eine Bewegungsgeschwindigkeit des Wandungselements, die bevorzugt größer ist als **2 m/s.**

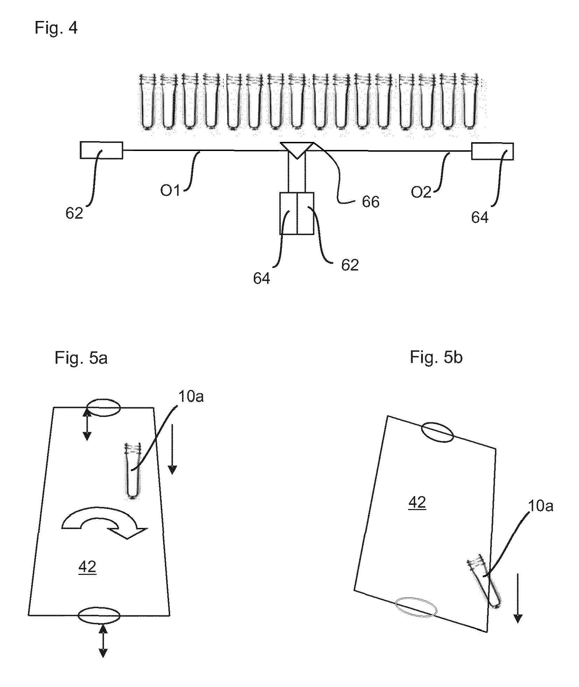

Fig. 4 kennzeichnet eine weitere Ausführungsform einer erfindungsgemäßen Vorrichtung. Bei dieser Ausführungsform sind zwei Strahlungseinrichtungen 62 und zwei Erfassungseinrichtungen 64 vorgesehen, welche damit auch zwei optische Pfade O1 und O2 ausbilden. Ein Strahlungsumlenkelement 66 wird eingesetzt, um beide Strahlen jeweils um 90° umzulenken.

Mit anderen Worten werden die Kunststoffvorformlinge 10 hier hängend mittels eines nicht dargestellten Transportdorns durch eine Heizgasse transportiert. Laserlichtschranken, die direkt unterhalb der Kuppen der Kunststoffvorformlinge 10 angeordnet sind, erkennen, wenn sich ein Kunststoffvorformling von seinem Transportdorn löst. Daraufhin wird, wie oben erwähnt, zum Beispiel über einen pneumatischen Schnellschaltzylinder die Bodenkachel bzw. das Wandungselement 42 nach unten weggezogen.

Da die vorhandene Streustrahlung im Heiztunnel die Licht- bzw. Laserlichtschranken ab einem gewissen Abstand bzw. einer gewissen Länge des Heiztunnels in ihrer Funktion beeinträchtigt, wird die in Fig. 4 gezeigte Anordnung aus zwei Sendern (bzw. Strahlungseinrichtungen), Empfängern, eines Spiegels bzw. Prismas 66 oder Reflektoren vorgeschlagen. Anstelle von Lichtstrahlung könnten auch Schallsender und -empfänger zum Einsatz kommen.

Die Fig. 5a und 5b zeigen zwei weitere Darstellungen zur Veranschaulichung einer Bewegung des Wandungselements 42. Dabei zeigt Fig. 5a eine Situation, bei der ein Kunststoffvorformling auf das Wandungselement 42 gefallen ist. Wie in Fig. 5b gezeigt, erfolgt ein Schwenken dieses Wandungselements 42 und damit ein Herabfallen des betreffenden Kunststoffvorformlings 10a. Nach dem Herunterfallen des Kunststoffvorformlings 10a z.B. auf eine darunter angeordnete Ausschleuseinrichtung kann das Wandungselement 42 wieder in seine ursprüngliche Lage zurückschwenken bzw. sich um 180°drehen. Auf diese Weise kann gewährleistet werden, dass die darüber an den Halteelementen 22 transportierten Vorformlinge das vordefinierte Temperaturprofil erhalten, da durch das Schwenken des Wandungselements 42 in seine ursprüngliche Lage zurück der zu beheizende Raum innerhalb der Erwärmungseinrichtung (bis auf den Zeitpunkt des Ausschwenkens) gleich groß bleibt. Das bzw. die Wandungselemente 42 sind bevorzugt beidseitig reflektierend ausgestaltet.

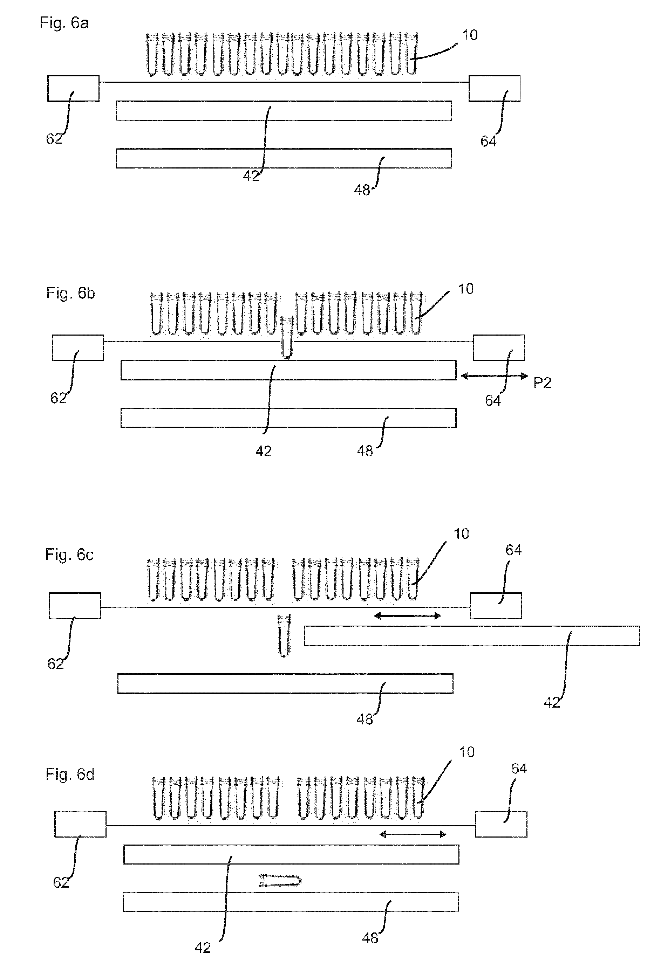

Die Fig. 6a - 6d zeigen eine weitere Ausgestaltung eines erfindungsgemäßen Verfahrens. Bei dieser Ausgestaltung ist, wie erkennbar, unterhalb des Wandungselements 42 eine Auffangeinrichtung 48 vorgesehen, welche zum Auffangen herabgefallener Kunststoffvorformlinge 10a dient. Falls wiederum das Herabfallen eines Kunststoffvorformlings 10a detektiert wird, kann hier das Wandungselement 42, wie durch den Pfeil P2 veranschaulicht, verschoben werden (vgl. Fig. 6b). Sobald das Wandungselement 42 weit genug verschoben ist, kann der Kunststoffvorformling 10a, wie in den Fig. 6c und 6d gezeigt, in die Auffangeinrichtung 48 fallen. Bei der in den Fig. 6a - 6d gezeigten Ausführungsformen wird das Wandungselement 42 in der Transportrichtung der Kunststoffvorformlinge verschoben. Es wäre jedoch auch möglich, dass dieses Wandungselement senkrecht hierzu, beispielsweise senkrecht zu der Figurenebene, verschoben wird oder auch, falls gewünscht, in einer hierzu schrägen Richtung.

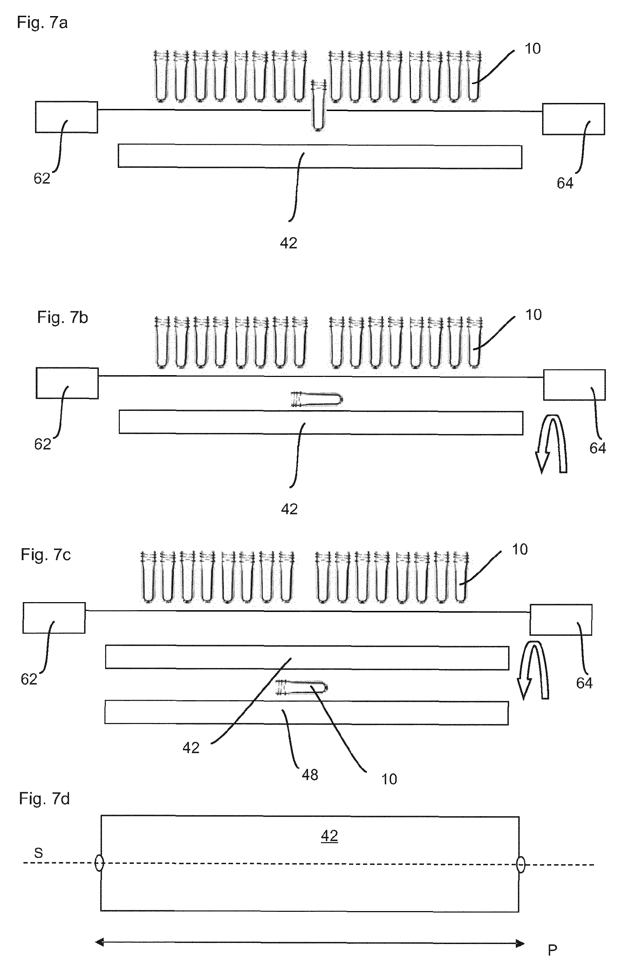

Die Fig. 7a - 7d zeigen eine weitere Ausgestaltung des erfindungsgemäßen Verfahrens. Bei dieser Ausgestaltung ist das Wandungselement 42, wie in den Fig. 5a und 5b gezeigt, schwenkbar angeordnet. Falls hier wiederum das Herabfallen eines Kunststoffvorformlings detektiert wird, kann, wie in Fig. 7d gezeigt, das Wandungselement 42 geschwenkt werden und auf diese Weise fällt der Kunststoffvorformling 10a von dem Wandungselement 42 herab. Dabei kann der Kunststoffvorformling wiederum gegebenenfalls in eine Auffangeinrichtung 48 fallen.

Es wäre dabei möglich, dass der Kunststoffvorformling ausgehend von der Auffangeinrichtung 48 wieder zurücktransportiert wird, um erneut erwärmt zu werden, es wäre jedoch auch denkbar, dass eine endgültige Ausschleusung erfolgt. Ob dabei eine endgültige Ausschleusung erfolgt oder eine Neuzuführung des Kunststoffvorformlings, kann sich dabei danach richten, wie weit dieser bereits erwärmt wurde. Es ist hierzu im Stand der Technik bekannt, dass ab einer gewissen Erwärmung der Kunststoffvorformlinge diese nicht mehr wiederverwendet werdet werden können, insbesondere, wenn die Kristallisationstemperatur bereits überschritten wurde.

Fig. 7d zeigt schematisch die Schwenkung des Wandungselements 42 bezüglich einer Schwenkachse, welche hier auch parallel zu dem Transportpfad T der Kunststoffvorformlinge ist.

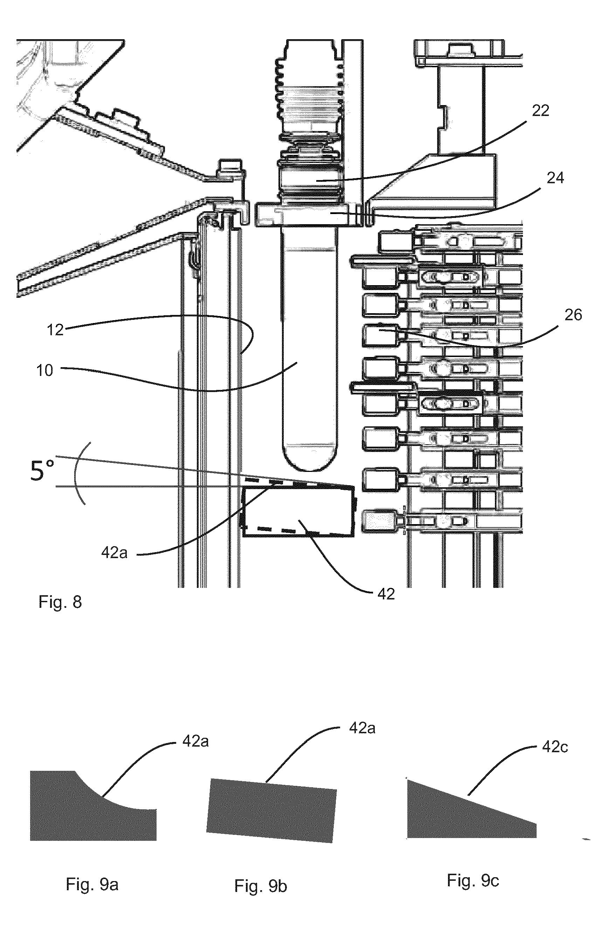

Fig. 8 zeigt eine weitere Ausführungsform einer erfindungsgemäßen Vorrichtung. Bei dieser Ausführungsform ist das Halteelement dargestellt, welches zur Aufnahme der Kunststoffvorformlings 10 dient. Das Bezugszeichen 24 kennzeichnet ein Abschirmelement wie etwa eine Abschirmplatte, welche Wärmestrahlung von den Gewinden der Kunststoffvorformlinge, welche nicht erwärmt werden sollen fernhält. Das Bezugszeichen 26 bezieht sich auf ein Strahlelement, welches Bestandteil des Heizelements ist. Dieses Strahlelement kann sich dabei entlang des Transportpfads der Kunststoffvorformlinge erstrecken.

Die Bodenwandung 42 bzw. das Wandungselement 42 ist bei der in Fig. 8 gezeigten Ausgestaltung nicht horizontal, bzw. insbesondere die dem Transportpfad der Kunststoffvorformlinge zugewandte Oberfläche 42a der Bodenwandung 42 liegt nicht horizontal sondern ist um einen Winkel von hier 5° geneigt. Auf diese Weise können herabgefallene Kunststoffvorformlinge selbsttätig aus einem möglichen Kollisionsbereich mit nachfolgenden Kunststoffvorformlingen herausfallen bzw. -rutschen.

Vorteilhaft ist das Wandungselement nicht genau zentrisch bezüglich einer Längsachse der Kunststoffvorformlinge angeordnet sondern hierzu versetzt. Bevorzugt weist das Wandungselement 42 einen geringeren Abstand zu der Reflektoreinrichtung 12 auf als zu den Strahlelementen 26. Allgemein werden bevorzugt die Kunststoffvorformlinge zwischen dem Strahlelementen 26 und der Reflektoreinrichtung 12 transportiert.

Bevorzugt weist das Wandungselement zu den Strahlelementen einen seitlichen Abstand auf, der zwischen 1 mm und 4mm, bevorzugt zwischen 1 mm und 3mm und besonders bevorzugt bei ca. 2mm liegt.

Die Fig. 9a - 9c zeigen beispielhaft drei Darstellungen zur Veranschaulichung einer Neigung der Oberfläche 42a. Bei der in Fig. 9b gezeigten Darstellung ist die Oberfläche als Ebene ausgebildet,welche in ihrer Gesamtheit gegenüber der Horizontalen geneigt ist. Bei der in Fig. 9a gezeigten Ausgestaltung ist die Oberfläche 42a gekrümmt ausgebildet und weist eine höhere Neigung bzw. Steigung in Richtung der Reflektoreinrichtung auf als in Richtung der Strahlelemente.

Bei der in Fig. 9c gezeigten Ausgestaltung ist die Oberfläche 42a ebenfalls geneigt ausgeführt, jedoch das gesamte Wandungselement 42 mit einem dreiecksförmigen Querschnitt ausgebildet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 4: Heizeinrichtung
- 8: Umlenkrad
- 6: Erfassungseinrichtung
- 10: Kunststoffvorformlinge
- 10a: herabgefallener Kunststoffvorformling
- 12: Reflektoreinrichtung
- 22: Halteelemente
- 24: Abschirmelement
- 26: Strahlelement
- 32: Zuführeinrichtung
- 34: Vereinzelungseinrichtung
- 40: Heizelement
- 42: Bodenwandung
- 42a: den Kunststoffvorformlingen zugewandte Oberfläche der Bodenwandung
- 44: Antriebseinrichtung
- 48: Auffangeinrichtung
- 52: Umformungsstation
- 56: Transportstern
- 62: Strahlungseinrichtung
- 64: Erfassungseinrichtung
- 66: Strahlungsumlenkelement
- 70: Anordnung zum Herstellen von Behältnissen

- T: Transportpfad
- O, O1, O2: optische Pfade

## Patentansprüche

1. Vorrichtung (1) zum Erwärmen von Kunststoffvorformlingen (10), mit einer Transporteinrichtung (2), welche die Kunststoffvorformlinge (10) entlang eines vorgegebenen Transportpfads transportiert, wobei die Transporteinrichtung (2) seine Vielzahl von Halteelementen (22) zum Halten der Kunststoffvorformlinge (10) aufweist mit wenigstens einer Erwärmungseinrichtung (4), welche die von der Transporteinrichtung (2) transportierten Kunststoffvorformlinge (10) erwärmt, wobei diese Erwärmungseinrichtung (4) ein wenigstens zeitweise unterhalb des Transportpfads der Kunststoffvorformlinge (10) angeordnetes Wandungselement (42) aufweist, wobei dieses wandungselement (42) bewegbar ist,
dadurch gekennzeichet, dass
die Vorrichtung (1) eine Erfassungseinrichtung (6) aufweist, welche eine Fehlstellung und/oder ein Herabfallen wenigstens eines Kunststoffvorformlings (10) gegenüber dem ihn haltenden Halteelement (22) erfasst, sowie eine Steuerungseinrichtung (20), welche aufgrund einer von der Erfassungseinrichtung erfassten Fehlstellung und/oder eines Herabfallens des wenigstens eines Kunststoffvorformlings (10) eine Bewegung des Wandungselements (42) einleitet und wobei das Wandungselement derart bewegt wird, dass ein Ausschleusen eines herabfallenden Kunststoffvorformlings ermöglicht ist.

2. Vorrichtung (1) nach Anspruch 1,
**dadurch gekennzeichnet, dass**
die Erfassungseinrichtung (6) die Fehlstellung und/oder das Herabfallen berührungslos erfasst.

3. Vorrichtung (1) nach Anspruch 2
**dadurch gekennzeichnet, dass**
die Erfassungseinrichtung (6) eine Strahlungseinrichtung. (62) aufweist sowie eine Empfangseinrichtung (64) welche die von der Strahlungseinrichtung (62) ausgehende Strahlung aufnimmt.

4. Vorrichtung (1) nach Anspruch 3,
**dadurch gekennzeichnet, dass**
in einem optischen Pfad zwischen der Strahlungseinrichtung und der Empfangseinrichtung (64) wenigstens ein Strahlungsumlenkelement angeordnet ist.

5. Vorrichtung (1) nach wenigstens einem der vorangegangenen Ansprüche,
**dadurch gekennzeichnet, dass**
die Vorrichtung (1) eine Dreheinrichtung aufweist, welche eine Drehung der einzelnen Kunststoffvorformlinge um deren Längsachsen oder hierzu parallele Achsen während deren Transport ermöglicht.

6. Vorrichtung (1) nach wenigstens einem der vorangegangenen Ansprüche,
**dadurch gekennzeichnet, dass**
die Erwärmungseinrichtung (4) wenigstens ein Heizelement aufweist, welches seitlich neben dem Transportpfad der Kunststoffvorformlinge angeordnet ist.

7. Vorrichtung (1) nach wenigstens einem der vorangegangenen Ansprüche,
**dadurch gekennzeichnet, dass**
die Vorrichtung (1) eine Auffangeinrichtung (48) zum Auffangen herabgefallener Kunststoffvorformlinge (10) aufweist.

8. Vorrichtung (1) nach wenigstens einem der vorangegangenen Ansprüche,
**dadurch gekennzeichnet, dass**
das Wandungselement (42) entlang des Transportpfads der Kunststoffvorformlinge wenigstens abschnittsweise segmentiert ist.

9. Vorrichtung (1) nach wenigstens einem der vorangegangenen Ansprüche,
**dadurch gekennzeichnet, dass**
eine den Kunststoffvorformlingen zugewandte Oberfläche 42a des Wandungselements 42 gegenüber einer horizontalen Ebene um einen Winkel geneigt ist, der zwischen 1° und 10° liegt.

10. Verfahren zum Erwärmen von Kunststoffbehältnissen und insbesondere von Kunststoffvorformlingen (10) wobei die Kunststoffvorformlinge (10) mittels einer Transporteinrichtung (2) entlang eines vorgegebenen Transportpfads transportiert und während dieses Transports mittels wenigstens einer Erwärmungseinrichtung (4) erwärmt werden und wobei die Kunststoffvorformlinge (10) während ihres Transports an Halteelementen (22) gehalten werden,
**dadurch gekennzeichnet, dass**
mittels einer Erfassungseinrichtung eine Fehlstellung und/oder ein Herabfallen eines Kunststoffvorformlings (10a) erfasst wird und in Reaktion auf eine derartige Erfassung ein unterhalb des Transportpfad liegendes Wandungselement (42) bewegt wird und wobei das Wandungselement derart bewegt wird, dass ein Ausschleusen eines herabfallenden Kunststoffvorformlings ermöglicht ist.

11. Verfahren nach Anspruch 10,
**dadurch gekennzeichnet, dass**
die Bewegung des Wandungselements (42) eine Linearbewegung und/oder eine Schwenkbewegung ist.

## Claims

1. Apparatus (1) for heating plastics material preforms (10), with a transport device (2) which transports the plastics material preforms (10) along a predefined transport path, wherein the transport device (2) has a plurality of holding elements (22) for holding the plastics material preforms (10), with at least one heating device (4) which heats the plastics material preforms (10) transported by the transport device (2), wherein this heating device (4) has a wall element (42) which is arranged for at least part of the time below the transport path of the plastics material preforms (10), wherein this wall element (42) is movable, **characterised in that** the apparatus (1) has a detection device (6) which detects an incorrect position and/or a falling of at least one plastics material preform (10) in relation to the holding element (22) holding this, and a control device (20) which initiates a movement of the wall element (42) on the basis of an incorrect position and/or falling of the at least one plastics material preform (10) detected by the detection device, the wall element being moved in such a manner that a discharge of a falling plastics material preform is made possible.

2. Apparatus (1) according to claim 1, **characterised in that** the detection device (6) detects the incorrect position and/or falling in a contactless manner.

3. Apparatus (1) according to claim 2, **characterised in that** the detection device (6) has a radiation device (62) and a receiver device (64) which receives the radiation emitted by the radiation device (62).

4. Apparatus (1) according to claim 3, **characterised in that** at least one radiation deflection element is arranged in an optical path between the radiation device and the receiver device (64).

5. Apparatus (1) according to at least one of the preceding claims, **characterised in that** the apparatus (1) has a rotation device which allows rotation of the individual plastics material preforms about their longitudinal axes or axes parallel thereto during their transport.

6. Apparatus (1) according to at least one of the preceding claims, **characterised in that** the heating device (4) has at least one heating element which is arranged laterally next to the transport path of the plastics material preforms.

7. Apparatus (1) according to at least one of the preceding claims, **characterised in that** the apparatus (1) has a capture device (42) to capture fallen plastics material preforms (10).

8. Apparatus (1) according to at least one of the preceding claims, **characterised in that** the wall element (42) is segmented at least in portions along the transport path of the plastics material preforms.

9. Apparatus (1) according to at least one of the preceding claims, **characterised in that** a surface (42a) of the wall element (42) facing the plastics material preforms is tilted in relation to a horizontal plane by an angle which lies between 1° and 10°.

10. Method for heating plastics material containers and in particular plastics material preforms (10), wherein the plastics material preforms (10) are transported by means of a transport device (2) along a predefined transport path and during this transport are heated by means of at least one heating device (4), and wherein the plastics material preforms (10) are held on holding elements (22) during their transport, **characterised in that** an incorrect position and/or a falling of a plastics material preform (10a) is detected by means of a detection device and that in response to such a detection, a wall element (42) lying below the transport path is moved and wherein the wall element is moved in such a manner that a discharge of a falling plastics material preform is made possible.

11. Method according to claim 10, **characterised in that** the movement of the wall element (42) is a linear movement and/or a swivel movement.

## Revendications

1. Dispositif (1) permettant de chauffer des paraisons en matière plastique (10), comportant un dispositif de transport (2), qui transporte les paraisons en matière plastique (10) le long d'une voie de transport prédéfinie, le dispositif de transport (2) étant muni d'une pluralité d'éléments de retenue (22) pour maintenir les paraisons en matière plastique (10), comportant au moins un dispositif de chauffage (4) qui chauffe les paraisons en matière plastique (10) transportées par le dispositif de transport (2), ledit dispositif de chauffage (4) comportant un élément de paroi (42) qui est disposé au moins temporairement au-dessous de la voie de transport des paraisons en matière plastique (10), ledit élément de paroi (42) étant déplaçable,
**caractérisé en ce que**
ledit dispositif (1) comporte un dispositif de détection (6) qui détecte une position incorrecte et/ou une chute d'au moins une paraison en matière plastique (10) par rapport à l'élément de retenue (22) le maintenant, et un dispositif de commande (20) qui, compte tenu d'une position incorrecte et/ou d'une chute de ladite au moins une paraison en matière plastique (10), détectées par le dispositif de détection, déclenche un mouvement de l'élément de paroi (42), et ledit élément de paroi étant déplacé de telle sorte qu'il est possible d'évacuer une paraison en matière plastique tombée.

2. Dispositif (1) selon la revendication 1,
**caractérisé en ce que**
le dispositif de détection (6) détecte sans contact la position incorrecte et/ou la chute.

3. Dispositif (1) selon la revendication 2,
**caractérisé en ce que**
le dispositif de détection (6) comporte un dispositif de rayonnement (62), et un dispositif de réception (64) qui capte le rayonnement émis par le dispositif de rayonnement (62).

4. Dispositif (1) selon la revendication 3,
**caractérisé en ce**
**qu'**au moins un élément de déviation du rayonnement est disposé dans la voie optique entre le dispositif de rayonnement et le dispositif de réception (64).

5. Dispositif (1) selon au moins l'une des revendications précédentes,
**caractérisé en ce que**
ledit dispositif (1) comporte un dispositif de rotation qui permet une rotation des différentes paraisons en matière plastique autour de leurs axes longitudinaux ou d'axes parallèles à ceux-ci pendant leur transport.

6. Dispositif (1) selon au moins l'une des revendications précédentes,
**caractérisé en ce que**
le dispositif de chauffage (4) comporte au moins un élément chauffant qui est disposé latéralement à côté de la voie de transport des paraisons en matière plastique.

7. Dispositif (1) selon au moins l'une des revendications précédentes,
**caractérisé en ce que**
ledit dispositif (1) comporte un dispositif collecteur (48) pour collecter les paraisons en matière plastique (10) tombées.

8. Dispositif (1) selon au moins l'une des revendications précédentes,
**caractérisé en ce que**
l'élément de paroi (42) est segmenté au moins par sections le long de la voie de transport des paraisons en matière plastique.

9. Dispositif (1) selon au moins l'une des revendications précédentes,
**caractérisé en ce**
**qu'**une surface (42a), orientée vers les paraisons en matière plastique, de l'élément de paroi (42) est inclinée par rapport à un plan horizontal selon un angle compris entre 1° et 10°.

10. Procédé permettant de chauffer des récipients en matière plastique et en particulier des paraisons en matière plastique (10), lesdites paraisons en matière plastique (10) étant transportées le long d'une voie de transport donnée par un dispositif de transport (2) et étant chauffées pendant ce transport par au moins un dispositif de chauffage (4), et les paraisons en matière plastique (10) étant maintenues pendant leur transport par des éléments de retenue (22),
**caractérisé en ce**
**qu'**une position incorrecte et/ou une chute d'une paraison en matière plastique (10a) sont détectées par un dispositif de détection (6), et un élément de paroi (42), situé au-dessous de la voie de transport, est déplacé en réaction à une telle détection, et ledit élément de paroi est déplacé de manière à permettre l'évacuation d'une paraison en matière plastique tombée.

11. Procédé selon la revendication 10,
**caractérisé en ce que**
le mouvement de l'élément de paroi (42) est un mouvement linéaire et/ou un mouvement de pivotement.
